# EUROPEAN PATENT SPECIFICATION

(11) **EP 1 206 963 B1**
(45) Date of publication and mention of the grant of the patent: **01.02.2006**
(21) Application number: 00124999.4
(22) Date of filing: 16.11.2000
(51) Int. Cl.: B01J 8/04, B01J 8/00

(54) **Modular chemical reactor**
Modularer chemischer Reaktor
Réacteur chimique modulaire

(43) Date of publication of application: 22.05.2002
(73) Proprietor: Casale Chemicals S.A., 6900 Lugano-Besso (CH)
(72) Inventor: Sioli, Giancarlo, 22010 Cernobbio (IT)
(74) Representative: Zardi, Marco

(56) References cited:
- CH-A- 238 685
- FR-A- 877 663
- GB-A- 597 501
- US-A- 2 273 865
- US-A- 2 504 402

## Description

### Field of Application

According to its general aspect the present invention relates to a reactor for catalytic reactions in gaseous phase. More in particular, the invention relates to low and medium pressure reactors for catalytic reactions in gaseous phase.

With the expression: "low and medium pressure reactors", it is intended to mean reactors operating at a pressure comprised in the range between 1-20 bar.

### Prior Art

A chemical reactor of the aforesaid type essentially comprises:
- a tubular, mainly cylindrical, shell closed on both sides by appropriate covers;
- one or more catalytic beds defined in corresponding substantially basket-like-shaped structures located inside the shell in mutually spaced relationship;
- one or more heat exchangers, supported in the shell in the spaces between the catalytic beds or totally immersed in the catalytic bed themselves.

The heat exchangers remove or provide the heat to the chemical reactants depending if the chemical reactor carries out an exothermic or an endothermic chemical reaction.

The chemical reactor to which the present invention relates, may also comprise:
- a plurality of inlet pipes to feed the reactants and the heat exchange fluids and outlet pipes to remove the products and the heat exchange fluids.
- a plurality of operational equipment, structural plates, flexible joints, to control all the variables involved during the chemical reaction.

As it is well known each chemical reaction, and particularly but not exclusively, each catalytic chemical reaction requires to be carried out, especially for industrial production, a specific reactor designed and built for such special purpose.

In fact, to carry out an industrial scale production with a combined high production yield, the reactor should be designed specifically due to the many variables involved in the chemical reaction to be carried out.

The "variables involved in a chemical reaction" are parameters, such as heat of reaction, residence time, catalytic activity, reaction pressure and temperature. Such variables are controlled specifically by appropriate means like thermocouples, flow meters and pressure gauges.

In order to appropriately carrying out a chemical reaction the shell must thus have, for example, suitable dimension, shape, apertures, wall-thickness and it must be made of suitable construction materials.

The same applies to the number, dimension and reciprocal distance of catalytic beds as well as to the catalyst and all the equipment and instruments, which have to be determined according to the catalytic reaction to be carried out.

In other words, each chemical reaction or reaction type has to be carried out by a specific reactor. Such a reactor cannot be used or adapted - in general - for any other reaction or reaction type, even if very much alike, but only for the single purpose it has been designed and built.

Moreover, when it is necessary or desired, for example, to increase or decrease the production rate and/or the yield of the reaction product, even if for the same reaction, it is necessary to design a new chemical reactor to substitute or to support the original one.

This well-known lack of flexibility in the structure and operation of a chemical reactor, which is designed for one specific chemical reaction and for a specific production capacity only, is a major drawback of the prior art.

Often, a newly built chemical reactor needs to be drastically upgraded shortly after its construction, because of the fast improvement of chemical reaction processes and the requirement of an ever-greater production capacity.

Chemical reactors are in general made with a one-piece external shell closed at the opposite ends thereof by corresponding covers and it is almost impossible to modify their structure once the reactors are built up.

It follows that in case a modification (even slight) is required in one specific part of the structure, it is often necessary to replace the whole reactor.

Moreover, also the number and the position of catalytic beds as well as of the heat exchangers housed in the shell are often fixed and cannot be changed in order to adapt the reactor to new exigencies.

Therefore, the reactors according to the prior art, despite advantageous for many aspects, are all suffering the drawback of not being adaptable to almost any other reaction and productivity except the ones for which they were specifically designed.

Conventional reactors cannot provide a proper flexibility, despite this is increasingly required in the above-mentioned field of application.

Modular chemical reactors are for instance shown in US-A-2 504 402 and US-A-2 273 865.

### Summary of the invention

The problem underlying the present invention is that of providing a reactor for chemical reactions, which can be adapted easily and in a reliable way to different reaction types, operating conditions and production capacities at low investment and operating costs and without the need of replacing it or supporting it with a new reactor.

Said problem is solved according to the present invention by a modular chemical reactor for catalytic reactions in gaseous phase comprising a shell, which is characterized by the fact that the reactor comprises:
- at least one first shell tubular portion;
- at least one catalytic bed internally associated to said at least one shell tubular portion;
- at least one second shell tubular portion;
- at least one heat exchanger internally associated to said at least one shell tubular portion;
- means for assembling said at least one first shell tubular portion to said at least one second shell tubular portion.

The present invention makes possible to provide a low or medium-pressure reactor made of one or more of said first and second portions, which can be assembled the one with the other in order to build up a specific reactor depending on the particular chemical reaction to be carried out or on the productivity to be performed.

Moreover, thanks to the modularity feature, a reactor according to the present invention originally designed for a specific reaction, can be modified (quickly and economically) in order to adapt it to different production requirements for the same reaction or even to carry out different reactions.

Actually, to each first and second portion one catalytic bed and one heat exchanger are associated respectively, so defining the reaction section and the heat exchange section of the reactor. Advantageously, depending on the reaction to be carried out and the required productivity, only the necessary number of shell portions is properly assembled.

For example, the catalytic bed associated portions can be assembled with intermediate heat exchanger associated portions to set up a reactor based on adiabatic reaction sections with intermediate cooling. Alternatively, the reactor can be made of a plurality of shell portions associated to a respective catalytic bed containing heat exchange means immersed into the catalytic bed so as to obtain a plurality of contiguous isothermal reaction sections.

The length of the reactor simply changes with the number of shell portions assembled together.

Preferably, according to the present invention said shell portions are internally assembled and interchangeable.

Furthermore each single first and second portion is an independent body, the portions being thus advantageously structurally independent one from the other.

According to a preferred embodiment of the invention, the shell portions are all identical modules, having the same size one with respect to the other.

Preferably and advantageously, the catalytic beds and the heat exchangers associated to the first and second shell portions, respectively, are removable with respect to the latter.

The characteristics and advantages of the invention are set forth in the description of an embodiment of a modular chemical reactor in accordance with the invention, given hereinbelow by way of non-limiting example with reference to the annexed drawings.

### Brief description of the drawings

- FIG. 1 schematically shows a reactor made by shell tubular portions in accordance with a first embodiment of the present invention;
- FIG. 2 schematically shows a detail of a tubular shell portion associated to a catalytic bed according to the invention;
- FIG.3 schematically shows a detail of a tubular shell portion associated to a heat exchanger according to the invention;
- FIG.4 schematically shows a reactor made by shell tubular portions in accordance with a further embodiment of the present invention.
- FIG.5 schematically shows a reactor made by shell tubular portions in accordance with a further embodiment of the present invention.

### Detailed description of the drawings

With reference to the aforementioned drawings with 1 is generally indicated a tubular reactor according to the present invention, comprising a shell 2 closed at both ends thereof by respective covers 3 and 4.

Said reactor 1 is in particular of the type defined as low or medium pressure reactor, i.e. operating at a pressure comprised in the range between 1-20 bar, advantageously used for catalytic reactions in gaseous phase as for instance methanol oxidation to formaldehyde, ethylene oxide production by ethylene oxidation, methylciclohexane dehydrogenation to toluene, sulphur dioxide oxidation to sulphur trioxide, styrene production by ethylbenzene dehydrogenation, toluene oxidation to benzoic acid, phtalic anhydride by naphtalene or o-xylene oxidation, maleic anhydride by oxidation of benzene or butane.

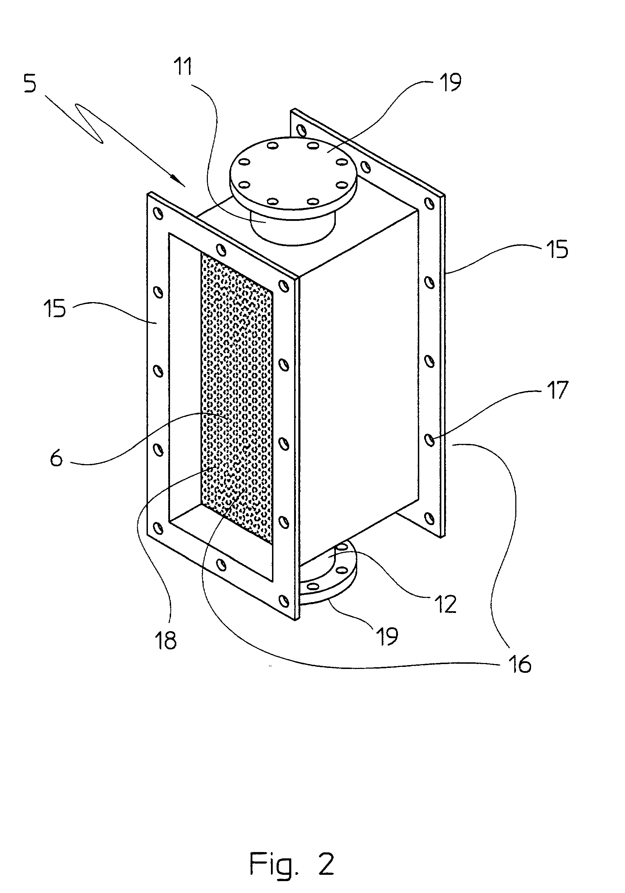

According to the present invention the shell 2 comprises at least one first shell tubular portion 5 (shown in detail in FIG.2). Each first shell portion 5 internally comprises one catalytic bed 6, which is preferably associated to the corresponding shell portion 5.

Preferably, the first shell portion 5 and the catalytic bed are reciprocally assembled in a removable manner in order to allow various insertion and removal of the catalyst in and from the first shell portion 5.

Each catalytic bed 6 is placed inside each first shell portion 5, transversally to the reactor longitudinal axis A.

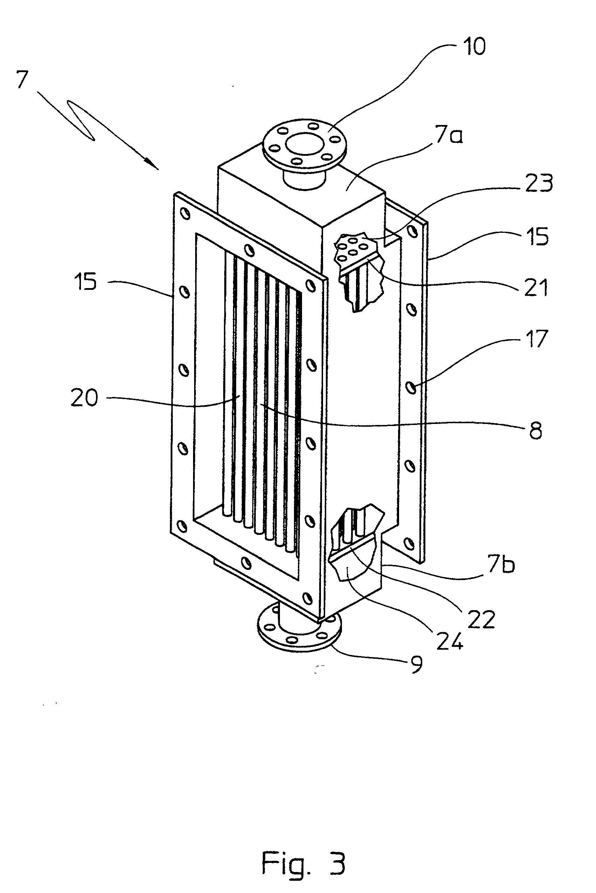

According to the present invention the shell 2 further comprises at least one second shell tubular portion 7 (shown in detail in FIG.3). Each second shell tubular portion 7 comprises internally one heat exchanger 8, for instance of the tube bundle type, which is preferably associated to the corresponding second shell portion 7 in a removable manner.

As for the portion 5, the second shell portion 7 and the heat exchanger 8 can be reciprocally assembled in a removable manner in order to allow various insertion and removal of the heat exchanger 8 in and from the second shell portion 7.

Each heat exchanger 8 is placed inside each second shell portion 7, transversally to the reactor longitudinal axis A.

Advantageously, said shell portions 5 and 7 are also structurally independent from each other so that they can be designed and dimensioned for carrying out specific stages of the chemical reaction and of the cooling or the heating.

The first shell tubular portion 5 comprising the catalytic bed will be also defined in the subsequent description as "catalytic bed associated portion", while the second shell tubular portion 7 comprising the heat exchanger will be also defined in the subsequent description as "heat exchanger associated portion".

In addition to what has been previously said, the catalytic beds 6 and the heat exchangers 8 are advantageously placed in mutually spaced relationship.

According to a further characteristic of the present invention first and second shell portions 5, 7 and thus shell 2, are characterized by a rectangular cross section area.

By the expression: "cross section area", it is intended to mean the shell area perpendicular to the reactor longitudinal axis A.

According to this embodiment, particular satisfactorily results can be obtained in terms of reactor space exploitation. In fact, the rectangular cross section area of the shell 2 allows an optimal use of the internal reactor space for housing the catalyst of the catalytic beds 6 and the tubes of the heat exchangers 8.

Moreover, the aforesaid first and second shell portions 5, 7 are advantageously modules of identical cross size.

By the term "identical cross size", it is intended to mean that each portion 5, 7 has the same cross section area and shape. Possibly, such portions may also have identical width.

In this way a reactor is obtained with constant cross section area, thus facilitating the flow rate of the gaseous phase trough the same.

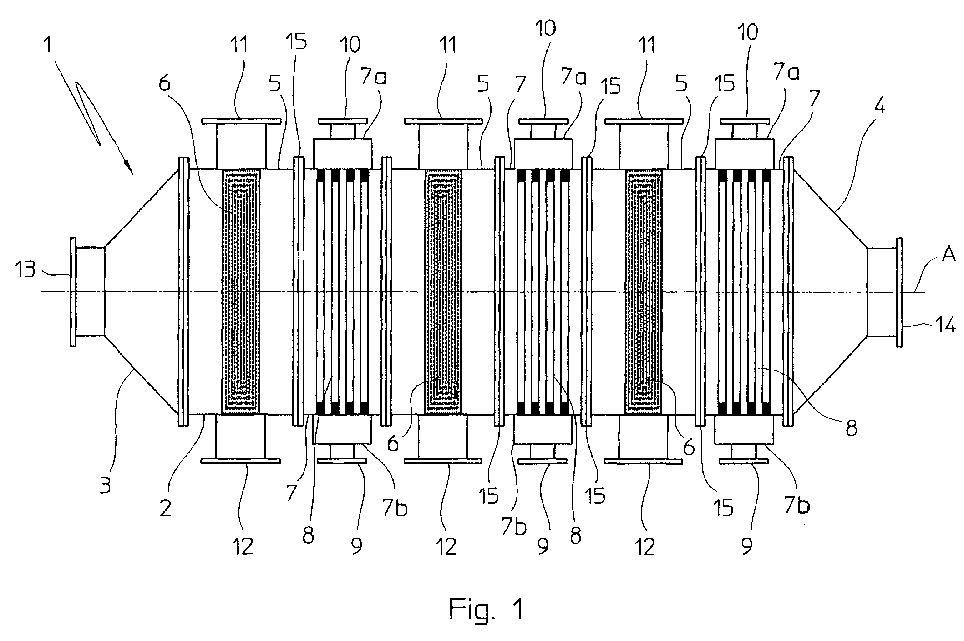

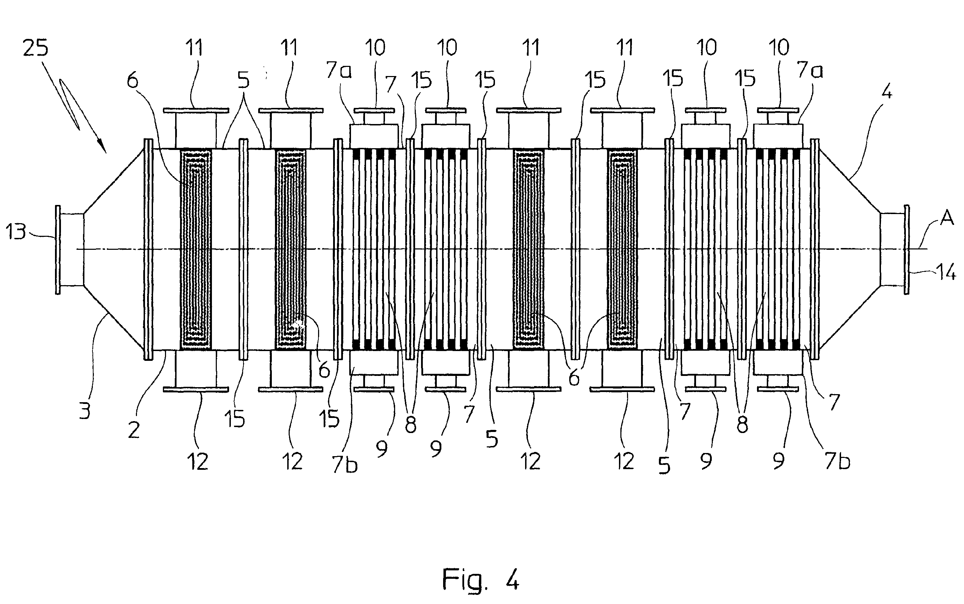

Advantageously, the portions 5 and 7 can be assembled together in different order, so as to alternate the catalytic beds and the heat exchangers according to the specific chemical reaction that it is intended to carry out. Examples of reactors thus obtained are shown in FIGS. 1 and 4. The reactor of FIG. 1 is particularly suitable for reactions of catalytic oxidation, hydrogenation, dehydrogenation, and dehydration. While the reactor of FIG. 4 is advantageous when a certain residence time must be provided to the reactant gas between successive catalytic reaction stages, or when the amount of catalyst to be provided is obtained by coupling two or more standard size first portions, or when reactants or dilution means are introduced between two successive catalytic beds.

In other words, the shell portions forming the reactor according to the present invention are advantageously interchangeable and can be assembled in the desired order depending on the reaction type, the required productivity or reaction yield.

Each catalytic bed associated portion 5 is equipped with a catalyst inlet opening 11 and catalyst outlet opening 12 for loading to, or discharging from the catalytic bed 6 the catalyst required specifically for the chemical reaction.

Analogously each heat exchanger associated portion 7 of the reactor 1 is advantageously equipped, with an inlet nozzle 9 and outlet nozzle 10 for the inlet and the outlet of a heat exchange fluid can be a cooling fluid, such as cooling water, boiler water, diathermic oil, boiling fluids, in case of an exothermic reaction or a heating fluid, such as steam, condensing fluids, molten salts, in case of an endothermic reaction.

Shell portions 5 and 7 are assembled together by conventional means (not represented) at corresponding coupling flanges 15. Conventional means for fixing the flanges 15 are for example screws, bolts or tie-rods.

Finally covers 3 and 4 are equipped with openings 13 and 14 for the reaction gas inlet and for the reaction products outlet, respectively.

The synthesis gas are fed in the inlet opening 13 and then flow in the first catalytic bed 6 associated to first portion 5 where the first catalytic stage of the reaction is performed.

The catalytic stage is followed by a heat exchange stage performed in the heat exchanger 8 associated to second portion 7.

In case of an exothermic catalytic reaction, heat is formed in the catalytic bed 6 and is then released in the heat exchanger 8 of the subsequent second portion 7 to a cooling fluid entering through the inlet nozzle 9 and exiting through the outlet nozzle 10.

During the passage from one shell portion to the other the gas tightness is ensured by aforesaid coupling flanges 15, which are gas-tight, fixed together.

The flanges 15 are designed in order to be easily assembled together to enhance the proper gas tightness within all the shell portions of the reactor.

The gas tightness between the portions can advantageously be ensured independently on the number and order in which the different portions are assembled.

Moreover, each portion-to-portion assembly or portion-from-portion disassembly can be carried out several times, without incurring in any mechanical or structural inconvenience.

In the example shown in the figures the reactor is horizontally oriented. Other orientations such as vertical can be obtained by utilizing the above shell portions.

The number of first and second portions assembled together, depending on the reaction stages to be performed, makes the length of the reactor 1.

With reference to FIG.2, a detail of a catalytic bed associated portion 5 is shown.

According to this embodiment the first shell tubular portion 5, with parallelepiped shape, has a rectangular cross-section area and is open on both front and rear sides, both indicated with 16.

The area of the rectangular openings 16, corresponds to the inner cross section area of the first shell portion 5.

The catalytic bed 6, containing the catalyst, is housed inside the shell first portion 5, in a space defined by the inner wall of the shell portion and by two gas permeable walls 18, placed on both front and rear sides 16.

Each catalytic bed 6 of this invention is perpendicularly placed with respect to the reactor longitudinal axis A; in this way the distance between each catalytic bed is advantageously reduced to the minimum.

The catalyst inlet and outlet openings 11 and 12 placed on the top and on the bottom, respectively, of the associated first portions 5, permits an easy access to the catalyst. This opening is either circular or rectangular. Each of the openings has a proper cover 19 to enable closing the catalytic bed 6 during the operation period.

The catalyst can be easily loaded and removed by gravity in the catalytic bed associated portion 5 by the aforementioned openings 11 and 12.

In this way the catalyst can be quickly and frequently changed.

Thanks to the present invention, the catalyst changing procedure becomes fast and economic using the reactor of the present invention even for low and medium pressure reactions characterized by frequent catalyst change.

The coupling flanges 15 can be rectangular and are placed along the outside perimeter of the front and rear sides 16 of the portion 5. Each coupling flange 15 has preferably a plurality of circular holes 17 along its entire perimeter.

With specific reference to FIG.3, a detail of a heat exchanger associated portion 7 is shown.

In FIG. 3 the details of the second portion 7 structurally and functionally equivalent to portion 5 of FIG.2 will be indicated with the same reference numbers and will not be further described.

In particular inside the second portion 7, is housed a heat exchanger 8 made by a plurality of tubes 20 supported by tube plates, 21 at the top end and 22 at the bottom end of the tubes 20.

The tubes 20 are in fluid communication with a chamber 23 over the tube plate 21.

Said chamber 23 is defined in the shell by a box (or channel) 7a collecting the fluid passing inside the tube bundle. At the bottom end of the tubes there is a chamber 24, below the plate 22.

Said chamber 24 is in fluid communication with the tubes 20 and is defined in the shell by a box (or channel) 7b.

Placed on the bottom of the second shell portion 7 is the cooling fluid inlet nozzle 9, as far as the cooling fluid outlet nozzle 10 on the top.

First and second shell portions 5, 7 are assembled together by conventional means, for example screws, passing trough holes 17 so as to fix the coupling flanges 15.

The plurality of holes 17 is made equal in size and position for each single coupling flange 15 allowing in this way to screw together the contacting flanges of two adjacent shell portions. This can be also made with interposition of gaskets, using conventional bolts or tie-rods.

According to another embodiment of the present invention (not represented) the coupling flanges 15 can be without holes 17, and simply held together by using clamps.

The reactor according to the present invention ensures advantageously an optimal temperature control during all the thermal stages.

The high operating efficiency characterizing each heat exchanger 8 is enhanced to control the temperature within the reactor in a range that can be contained below 1°C.

Another advantage among the horizontal catalytic reactors is the configuration of each catalytic bed 6; being perpendicular to the reactor 1 longitudinal axis A, this orientation provides an outstanding space reduction.

According to a further embodiment, not represented, the invention is made with a circular cross section area.

In this second embodiment, advantageously functional for higher-pressure performances, both catalytic bed and heat exchanger associated portions have a circular cross section area. Consequently all the parts composing said shell portions are designed to fit the circular cross section. According to the present invention, the reactor described above shown in FIG.1 comprises catalytic bed and heat exchanger associated portions 5 and 7 placed in order to obtain a catalytic stage alternate to a heat exchanging stage.

The assembly of these portions constitutes a typical reactor based on adiabatic reaction stages, in which heat is exchanged after each catalytic stage.

As discussed above, thanks to the present invention it is possible to obtain a different reactor configuration using the same portions, but assembled in a different order and number.

It might be advantageous, for example due to the use of a new catalyst, to carry out a reaction requiring an extended catalytic stage followed by an extended heat exchanging stage.

This can be advantageously done by the present invention, by simply assembling sets of catalytic bed associated portions 5, for example in the number of two for each set, and alternating them with sets made by two heat exchanging associated portions 7.

As a consequence of this assembling of shell portions the reactor 25 is obtained as shown in FIG.4.

Reactor 25 is made by the same kind of portions with respect to the reactor 1 in FIG.1, but enables to carry out a substantially different reaction from the one carried out in the reactor 1.

The embodiments above described with respect to the present invention are conceived to perform mainly adiabatic stages and are applicable to any process for the performance of a catalytic exothermic or endothermic chemical reaction in a modular chemical reactor.

According to a further embodiment of the present invention, a modular reactor can be conceived for carrying out isothermal or pseudo-isothermal catalytic chemical reactions.

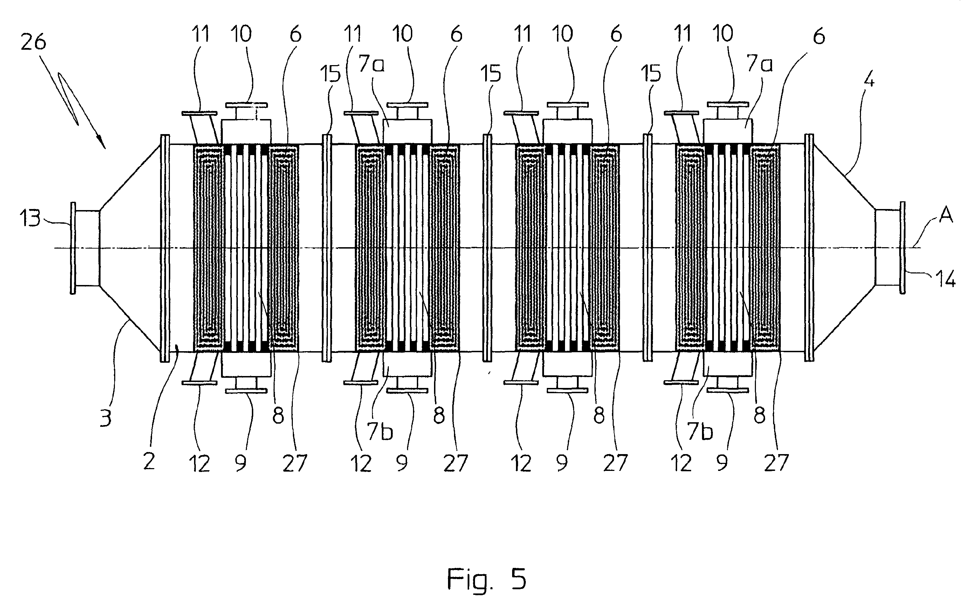

This particular embodiment is for instance shown in FIG. 5. The details of the modular reactor structurally and functionally equivalent to the reactors of FIGS.1 and 4 will be indicated with the same reference numbers and will not be further described.

According to FIG. 5, a modular chemical reactor 26 for exothermic or endothermic catalytic reactions in gaseous phase comprises a plurality of tubular portions 27 of the shell 2.

At least one catalytic bed 6 is internally associated to each shell tubular portion 27 and contains heat exchange means, such as one heat exchanger 8, immersed into the catalyst.

Means (not shown) for assembling the plurality of shell tubular portions 27 at the corresponding coupling flanges 15 are also provided in the reactor 26. Examples of assembly means are screws, bolts or tie-rods that allow a gas-tight fixing of the flanges 15.

Thanks to the provision of a heat exchanger 8 within the catalyst bed 6 in the shell tubular portions 27, heat can be advantageously supplied or removed during the chemical reaction thus keeping the temperature of each catalytic stage substantially constant.

While in the foregoing specification this invention has been described in relation to a certain preferred embodiment thereof, and many details have been set forth for purpose of illustration, it will be apparent to those skilled in the art that the invention is susceptible to additional embodiments and certain details described herein can be varied considerably without departing from the invention as set forth in the claims.

## Claims

1. Modular chemical reactor (1) for catalytic reactions in gaseous phase comprising a shell (2) that comprises:
- at least one first shell tubular portion (5);
- at least one catalytic bed (6) internally associated to said at least one first shell tubular portion (5);
- at least one second shell tubular portion (7);
- at least one heat exchanger (8) internally associated to said at least one second shell tubular portion (7);
- means for assembling said at least one first shell tubular portion (5) to said at least one second shell tubular portion (7),
**characterized in that** said heat exchanger (8), internally associated to one respective second shell tubular portion (7), is removable with respect to said second tubular portion (7).

2. Modular chemical reactor (1) according to claim 1 wherein said at least one first portion (5) and said at least one second portion (7) are interchangeable.

3. Modular chemical reactor (1) according to claim 1 wherein said at least one first portion (5) and said at least one second portion (7) are structurally independent.

4. Modular chemical reactor (1) according to claim 1 wherein said at least one first portion (5) and said at least one second portion (7) have the same cross size one with respect to the other.

5. Modular chemical reactor (1) according to claim 1 wherein said shell (2) has a rectangular cross section area.

6. Modular chemical reactor (1) according to claim 1 wherein said shell (2) has circular cross section area.

7. Modular chemical reactor (1) according to claim 1 wherein said catalytic bed (6), internally associated to one respective first shell tubular portion (5), is removable with respect to said first tubular portion (5).

8. Modular chemical reactor (26) according to claim 1, wherein each shell tubular portion (27) comprises one catalytic bed (6) and heat exchange means (8) immersed into the catalyst, internally associated to the shell tubular portion (27).

## Patentansprüche

1. Modularer chemischer Reaktor (1) für katalytische Reaktionen in gasförmiger Phase, mit einem Mantel (2), der umfasst:
- wenigstens einen ersten rohrförmigen Mantelabschnitt (5);
- wenigstens ein katalytisches Bett (6), das anlagenintern dem wenigstens einen ersten rohrförmigen Mantelabschnitt (5) zugeordnet ist;
- wenigstens einen zweiten rohrförmigen Mantelabschnitt (7);
- wenigstens einen Wärmetauscher (8), der anlagenintern dem wenigstens einen zweiten rohrförmigen Mantelabschnitt (7) zugeordnet ist;
- Einrichtungen, um den wenigstens einen ersten rohrförmigen Mantelabschnitt (5) an den wenigstens einen zweiten rohrförmigen Mantelabschnitt (7) anzumontieren,
**dadurch gekennzeichnet, dass** der Wärmetauscher (8), der anlagenintern einem jeweiligen zweiten rohrförmigen Mantelabschnitt (7) zugeordnet ist, in Bezug auf den zweiten rohrförmigen Abschnitt (7) herausnehmbar ist.

2. Modularer chemischer Reaktor (1) nach Anspruch 1, bei dem der wenigstens eine erste Abschnitt (5) und der wenigstens eine zweite Abschnitt (7) untereinander austauschbar sind.

3. Modularer chemischer Reaktor (1) nach Anspruch 1, bei dem der wenigstens eine erste Abschnitt (5) und der wenigstens eine zweite Abschnitt (7) vom Aufbau her unabhängig sind.

4. Modularer chemischer Reaktor (1) nach Anspruch 1, bei dem der wenigstens eine erste Abschnitt (5) und der wenigstens eine zweite Abschnitt (7) dieselbe Querschnittsgröße in Bezug aufeinander haben.

5. Modularer chemischer Reaktor (1) nach Anspruch 1, bei dem der Mantel (2) eine rechteckige Querschnittsfläche hat.

6. Modularer chemischer Reaktor (1) nach Anspruch 1, bei dem der Mantel (2) eine kreisförmige Querschnittsfläche hat.

7. Modularer chemischer Reaktor (1) nach Anspruch 1, bei dem das katalytische Bett (6), das anlagenintern einem jeweiligen ersten rohrförmigen Mantelabschnitt (5) zugeordnet ist, in Bezug auf den ersten rohrförmigen Abschnitt (5) herausnehmbar ist.

8. Modularer chemischer Reaktor (26) nach Anspruch 1, bei dem jeder rohrförmige Mantelabschnitt (27) ein katalytisches Bett (6) sowie eine Wärmetauschereinrichtung (8) umfasst, die in den Katalysator eingetaucht ist, die anlagenintern dem rohrförmigen Mantelabschnitt (27) zugeordnet sind.

## Revendications

1. Réacteur chimique modulaire (1) pour réactions catalytiques en phase gazeuse, comprenant une enveloppe (2) qui comprend :
- au moins une première partie tubulaire d'enveloppe (5) ;
- au moins un lit catalytique (6) intérieurement associé à ladite au moins une première partie tubulaire d'enveloppe (5) ;
- au moins une deuxième partie tubulaire d'enveloppe (7) ;
- au moins un échangeur de chaleur (8) intérieurement associé à ladite au moins une deuxième partie tubulaire d'enveloppe (7) ;
- des moyens pour assembler ladite au moins une première partie tubulaire d'enveloppe (5) à ladite au moins une deuxième partie tubulaire d'enveloppe (7),
**caractérisé en ce que** ledit échangeur de chaleur (8) intérieurement associé à une deuxième partie tubulaire d'enveloppe (7) respective, est séparable de ladite deuxième partie tubulaire (7).

2. Réacteur chimique modulaire (1) selon la revendication 1, dans lequel ladite au moins une première partie (5) et ladite au moins une deuxième partie (7) sont interchangeables.

3. Réacteur chimique modulaire (1) selon la revendication 1, dans lequel ladite au moins une première partie (5) et ladite au moins une deuxième partie (7) sont structuralement indépendantes.

4. Réacteur chimique modulaire (1) selon la revendication 1, dans lequel ladite au moins une première partie (5) et ladite au moins une deuxième partie (7) ont réciproquement la même taille de section.

5. Réacteur chimique modulaire (1) selon la revendication 1, dans lequel ladite enveloppe (2) a une surface de section rectangulaire.

6. Réacteur chimique modulaire (1) selon la revendication 1, dans lequel ladite enveloppe (2) a une surface de section circulaire.

7. Réacteur chimique modulaire (1) selon la revendication 1, dans lequel ledit lit catalytique (6) intérieurement associé à une première partie tubulaire d'enveloppe (5) respective, est séparable de ladite première partie tubulaire (5).

8. Réacteur chimique modulaire (26) selon la revendication 1, dans lequel chaque partie tubulaire d'enveloppe (27) comprend un lit catalytique (6) et des moyens d'échange de chaleur (8) immergés dans le catalyseur, intérieurement associés à la partie tubulaire d'enveloppe (27).
